# EUROPÄISCHE PATENTANMELDUNG

(11) **EP 1 630 427 A1**
(43) Veröffentlichungstag der Anmeldung: **01.03.2006**
(21) Anmeldenummer: 04020346.5
(22) Anmeldetag: 27.08.2004
(51) Int. Cl.: F16B 12/24

(54) **Verbindungselement zum Verbinden zweier Werkstücke**

(71) Anmelder: Lamello AG, 4416 Bubendorf (CH)
(72) Erfinder: Pletscher, Richard, 4416 Bubendorf (CH); Pichelin, Frédéric, 3044 Saeriswil/BE (CH); Graf, René, 1400 Yverdon-les-Bains (CH); Mueller, Jochen, 8461 Oelingen (CH); Kramer, Erich, 4058 Basel (CH); Steiger, Benjamin, 2503 Biel (CH)
(74) Vertreter: Kemény AG Patentanwaltbüro

(57) **Zusammenfassung**

Für das Verbinden von vorzugsweise flächigen Bereichen (13) zweier Werkstücke (11) wird die Verwendung mindestens eines Elementes (1) vorgeschlagen, welches plättchenartig bzw. lamellenartig ausgebildet ist. Das plättchenartige bzw. lamellenartige Element (1) ist aus einem Verbundwerkstoff hergestellt, wie einem Faserverbund- bzw. Spanverbundwerkstoff. Bekannte Verbundwerkstoffe sind beispielsweise druckfeste Holzfasern und/oder Holzspanverbundmaterialien. Allerdings eignen sich als Verbundwerkstoffe ebenfalls solche auf Basis von Zellstofffasern bzw. Zellstoffspänen.

## Beschreibung

Die vorliegende Erfindung betrifft ein Verbindungselement zum Verbinden von vorzugsweise flächigen Bereichen zweier Werkstücke gemäss dem Oberbegriff nach Anspruch 1, ein Verfahren zur Herstellung von Verbindungselementen sowie ein Verfahren zum Verbinden zweier Werkstücke.

Für das Verbinden von Werkstücken, wie beispielsweise Holzplatten, werden unter anderem beispielsweise nach dem Prinzip von Nut-Federverbindungen, plättchenartige Elemente oder Lamellen vorgeschlagen, welche in schlitzartige/kreisabschnittförmige Vertiefungen bzw. in Nutschlitze in den Werkstücken eingesteckt werden. Derartige lamellenartige Plättchen werden beispielsweise in den beiden Schweizer Patenten CH 337 653 und CH 339 735 vorgeschlagen, welche zwischenzeitlich grösste Beliebtheit in der Verbindungstechnik geniessen. Derartige Holzlamellen sind zum Massengebrauchsartikel geworden und werden von vielen Produzenten weltweit angeboten.

Diese Holzverbindungselemente, oder auch Lamellen oder Flachdübel genannt, weisen oft eine ellipsenförmige Geometrie mit unterschiedlichen Abmessungen auf und werden in Holzflächen gefrästen Nuten eingesteckt und ermöglichen so stabile unsichtbare Holzverbindungen.

Die Aufgabe der vorliegenden Erfindung besteht nun darin, einerseits eine kostengünstigere Herstellung derartiger lamellenartiger Verbindungselemente oder Flachdübel vorzuschlagen sowie die Realisierung genauerer Produkteigenschaften, eine Reduktion der Fertigungsschritte sowie ein besseres Beherrschen von Produktionsparametern zu ermöglichen.

Erfindungsgemäss wird die gestellte Aufgabe mittels eines Verbindungselementes gemäss dem Oberbegriff nach Anspruch 1 gelöst.

Vorgeschlagen wird, dass ein Verbindungselement der bekannten Art bzw. ein plattenartig ausgebildetes lamellenartiges Element, welches vorgesehen ist, um in entsprechende schlitzartige Vertiefungen bzw. Nutschlitze in vorzugsweise flächigen Bereichen zweier zu verbindenden Werkstücke eingesteckt bzw. eingeführt zu werden, aus einem Verbundwerkstoff hergestellt ist. Für den Verbundwerkstoff kommen insbesondere Holzfasern, Holzschnitzel oder Holzstaub oder auch Zellstofffasern oder Zellstoffschnitzel in Frage, welche mittels eines Bindemittels auf Polymerbasis und/oder einem wasserbasierenden Bindemittel zum Faserverbundwerkstoff verarbeitet werden.

Insbesondere bei Holzfaser- oder Holzspanverbundwerkstoffen handelt es sich vorzugsweise um sogenannte MDF- oder HDF-oder Spanplatten, welche mit den üblicherweise für die Herstellung derartiger Platten verwendeten Bindemitteln hergestellt werden. Dabei kann es sich beispielsweise um Harnstoff-Formaldehyd-Harze handeln, um Melaminmisch-Harze, um Phenol-Formaldehyd-Harze, Resorzin- und Phenolresorzin-Formaldehyd-Harze sowie neuerdings auch um sogenannte PMDI-Harze bzw. Polymethylendiisocyanat-Harze. Mit anderen Worten, handelt es sich um Reaktions-Harze der bekannten Art, welche üblicherweise für die Herstellung derartiger Holzfasern- bzw. Holzspanverbundmaterialien verwendet werden. Auf die Herstellungsweise derartiger Holzfaser- bzw. Holzspanverbundmaterialien soll an dieser Stelle nicht weiter eingegangen werden, da sie aus dem Stand der Technik bestens bekannt ist. Daraus ergibt sich aber auch, dass die vorliegende Erfindung nicht auf die bis heute üblicherweise bekannten Holfaser- bzw. Holzspanverbundplatten beschränkt bleibt, sondern dass selbstverständlich auch neuere Entwicklungen auf diesem Gebiet unter den Schutzbereich der vorliegenden Erfindung fallen.

Daneben ist es aber auch möglich, für die Herstellung der erfindungsgemäss vorgeschlagenen lamellenartigen Verbindungselemente Zellstoff-Verbundwerkstoff, wie insbesondere Karton, zu verwenden.

Überraschenderweise hat sich gezeigt, dass die erfindungsgemäss vorgeschlagenen Verbundwerkstoffe ebenso geeignet sind, feste und stabile Verbindungen zwischen zwei Werkstücken, wie insbesondere zwei Holzwerkstücken, herzustellen, wie sie durch die Verwendung der heute handelsüblichen Lamellenverbindungselementen aus Massivholz erreicht werden. Der grosse Vorteil der Verwendung der erfindungsgemäss vorgeschlagenen Faserverbund- bzw. Spanverbundwerkstoffen liegt darin, dass von substantiell kostengünstigeren Rohstoffen ausgegangen werden kann, die Anzahl Fertigungsschritte reduziert werden kann sowie eine Fertigungsautomatisierung erreicht werden kann in bis heute nicht erreichbarem Umfang. Zudem weisen die Produkte verbesserte Eigenschaften, wie beispielsweise dimensionengeringere Schwankungen, auf, was zur besseren Beherrschung der Produktionsparameter führt. Schliesslich können die erfindungsgemäss vorgeschlagenen lamellenartigen Verbindungselemente bzw. Flachdübel mittels unterschiedlichen Verfahren hergestellt werden, wie beispielsweise durch Stanzen, Fräsen, Giessen, Spritzgiessen sowie durch Laminieren und anschliessendes Stanzen.

Daneben ist es auch möglich, nebst den oben vorgeschlagenen Fasern und Spänen auf Holz bzw. auf Zellstoffbasis auch Polymerfasern, Glasfasern, Naturfasern, wie z.B. Chinaschilf, Mais, Stroh, und dgl. beizufügen, um die Produkteigenschaften der schlussendlich herzustellenden Verbindungselemente zu beeinflussen.

Gemäss einer weiteren Ausführungsvariante ist es möglich, die erfindungsgemäss vorgeschlagenen lamellenartigen Verbindungselemente mit einer glatten Oberfläche zu versehen, oder aber aufgeraut bzw. strukturiert, wobei es beispielsweise möglich ist, in die Oberfläche einen Produktenamen oder eine Herkunftseingabe einzustanzen.

Im Weiteren sei erwähnt, dass selbstverständlich irgendwelche geometrischen Formen als lammellenartige Verbindungselemente verwendet werden können, wobei aufgrund gewonnener Erfahrung ellipsenähnlich ausgebildete Lamellen bzw. Flachdübel bevorzugt sind, wie anschliessend unter Bezug auf die beigefügten Figuren näher erläutert. Aber selbstverständlich ist es auch möglich, rechteckige, kreisrunde, ovale, dreieckförmige, sechseckförmige, etc. Lamellen bzw. Flachdübel für das Verbinden von Werkstücken zu verwenden. Die vorliegende Aufzählung möglicher Formen ist selbstverständlich nicht abschliessend. Auch der Querschnitt muss nicht gleich bleibend sein. Wichtig dabei ist, dass die für das Einstecken der Lamellen bzw. Flachdübel vorgesehenen schlitzartigen Vertiefungen bzw. Nutschlitze derart ausgebildet sind, dass ein vorzugsweise passgerechtes Einstecken bzw. Einführen der Lamellen gewährleistet ist.

Die Erfindung wird nun beispielsweise und unter Bezug auf die beigefügten Figuren noch zusätzlich erläutert.

Dabei zeigen:
- Fig. 1: in Perspektive ein lamellenartiges Verbindungselement der erfinderischen Art,
- Fig. 2: eine Vielzahl möglicher Ausführungsformen der erfindungsgemässen Lamelle,
- Fig. 3: ein Werkstück mit Endfläche, aufweisend eingefräste Nutschlitzen, vorgesehen für das Einsetzen von Verbindungslamellen,
- Fig. 4: schematisch in Perspektive den Verbindungsvorgang zweier Holzwerkstücke unter Verwendung erfindungsgemässer Verbindungslamellen, und
- Fig. 5: verschiedene Verbindungsanordnungen zum Verbinden zweier Werkstücke unter Verwendung der erfindungsgemässen Verbindungslamellen.

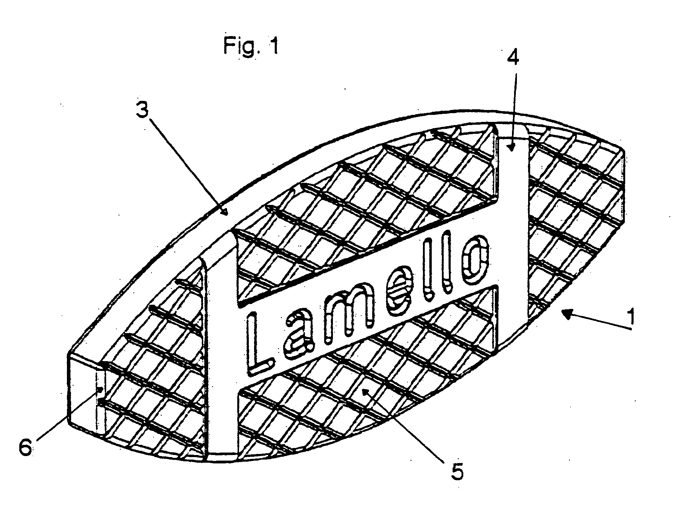

Fig. 1 zeigt in Perspektive eine bevorzugte Ausführungsform eines erfindungsgemässen lamellenartigen Verbindungselementes 1, welches eine ellipsenähnliche Form aufweist. Wie gemäss der vorliegenden Erfindung vorgeschlagen, besteht das lamellenartige Verbindungselement 1 aus einem Faserverbund bzw.

Spanverbundwerkstoff, wie insbesondere einem Holzfaser- bzw. Holzspanverbundwerkstoff oder einem Zellstoffverbundwerkstoff. Bekannte derartige Materialien sind beispielsweise MDF-, HDF- oder Spanplatten, welche in der holzverarbeitenden Industrie bestens bekannt sind. Entsprechend soll an dieser Stelle nicht weiter auf diese Materialien eingegangen werden, da sie auf dem Markt gängig sind und gut erhältlich sind. Zudem können die beiden Seiten bzw. Führungsflächen 5 aufgeraut oder geprägt ausgebildet sein, um eine gute Verleimbarkeit der Lamelle 1 in den schlitzartigen Nuten zu erzielen. Damit ergibt sich eine optimale Adhäsion mit hoher Ausreissfestigkeit. Mit den neuen erfindungsgemäss vorgeschlagenen Materialien und entsprechenden Herstellverfahren lassen sich Lamellen mit erheblich geringeren Toleranzen herstellen. Enge Toleranzen ermöglichen optimale Leimschichten, wie insbesondere PVAC-Leimschichten (Polyvinylacetat), die zu besseren oder mindestens ähnlich guten Resultaten führen, wie mit herkömmlichen Lamellen erzielbar. Zudem ist es auf diese Art und Weise möglich, nebst der in Fig. 1 dargestellten Strukturierung, eine Produktangabe oder eine Herkunftsangabe anzuordnen. Weiter kann es vorteilhaft sein, leicht erhöhte Führungsstege 4 anzuordnen, um eine perfekte Passgenauigkeit und einen kleinen Widerstand bei der Montage zu erzielen.

Wiederum kann es vorteilhaft sein, runde, glatte Kanten 6 vorzusehen, um eine komfortable und einfache Handhabung zu erzielen.

Selbstverständlich handelt es sich bei der in Fig. 1 dargestellten Form der Lamelle 1 um ein Beispiel und andere lamellenartige Verbindungselemente, wie beispielsweise kreisrunde, ovale, elliptische, sechseckförmige, etc., sind möglich.

Weiter hat es sich gezeigt, dass auch die Verwendung von festen Kartonmaterialien, wie beispielsweise Zellstofffaser- oder Zellstoffschnitzelverbundwerkstoffen bzw. Zellulosefaser verstärkte Kartonmaterialien geeignet sein können, indem die durch die Verwendung der erfindungsgemäss vorgeschlagenen Lamellen erzielte Festigkeit enorm ist und bereits zu recht stabilen Verbindungen führen kann. Dabei ist es auch möglich, das Kartonmaterial zusätzlich zu imprägnieren, wie beispielsweise mittels einer Acrylharzmischung, wie z.B. einer Aminoharz-Acrylat-Mischung. Zudem können Lamellen aus Kartonmaterial für Richtzwecke, zum Positionieren bzw. als Montagehilfen eingesetzt werden.

Wiederum ist es weiter möglich, nebst Holzfasern, Holzspänen oder Zellstofffasern auch zusätzlich Kunststofffasern und/oder Glasfasern und/oder Naturfasern beizufügen bzw. zu verwenden, um ggf. erhöhten Anforderungen an die Festigkeit der Lamelle zu genügen.

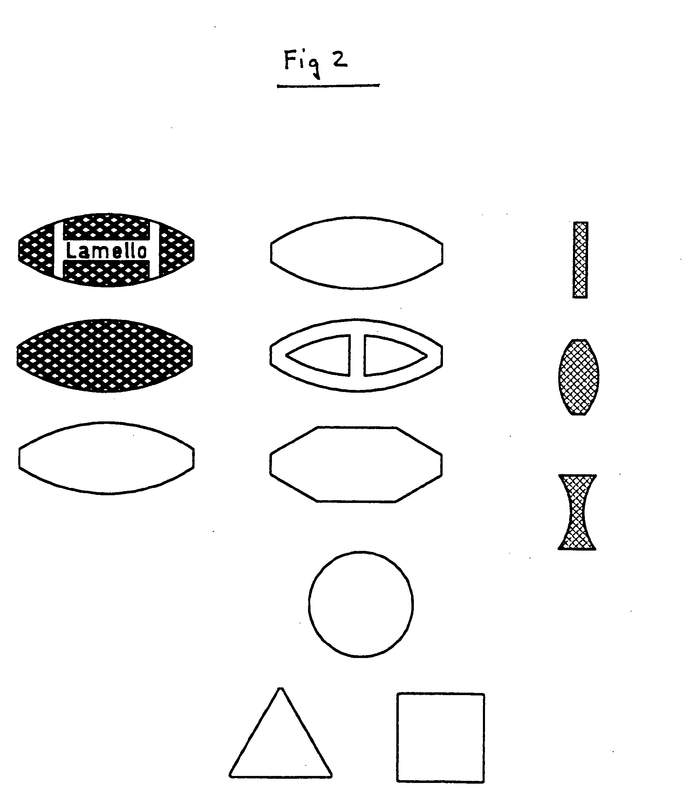

In Fig. 2 sind eine Reihe möglicher Ausführungsvarianten einer erfindungsgemässen Lamelle schematisch dargestellt. Dabei zeigt die erste Spalte Beispiele von möglichen Oberflächenbeschaffenheiten, wie aufgeraut, gerastert, aufweisend Schriftzüge oder aber beispielsweise glatt.

In der zweiten Spalte sind Beispiele von möglichen Ausführungsformen dargestellt, wie beispielsweise ellipsenförmig, kreisrund, dreieckig, quadratisch, etc. In der letzten Spalte schliesslich sind Beispiele von möglichen Querschnitten von Lamellen dargestellt, wobei der Querschnitt gleichförmig sein kann, keilförmig, ellipsenförmig, etc.

Die Darstellung in Fig. 2 ist selbstverständlich keinesfalls abschliessend und irgendwelche andere denkbare Formen, Oberflächenbeschaffenheiten und Querschnitte sind möglich. Wesentlich ist die erfindungsgemäss vorgeschlagene Materialwahl für die Herstellung der Verbindungslamellen.

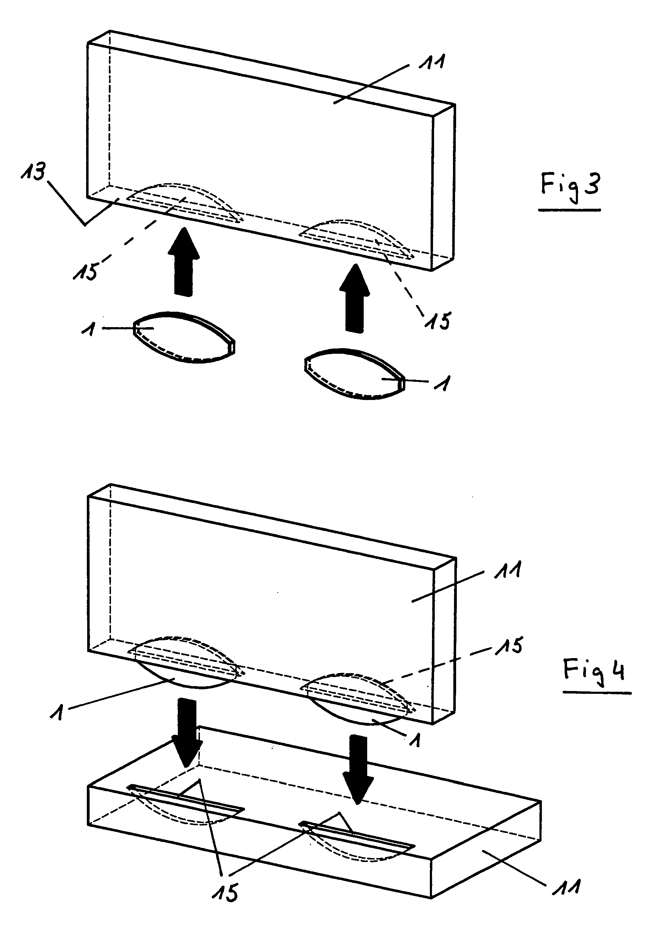

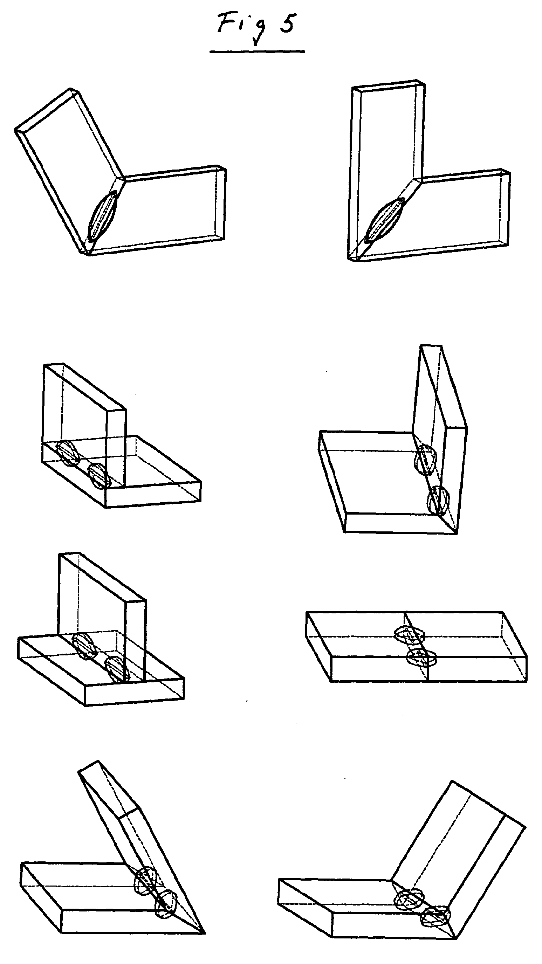

In Fig. 3 soll nun gezeigt werden, wie die erfindungsgemäss vorgeschlagenen lamellenartigen Verbindungselemente in entsprechende schlitzartige Vertiefungen bzw. Nutschlitze eines Werkstückes eingeführt werden. In einem Werkstück 11, wie beispielsweise einer Holzplatte, sind in der stirnseitigen Abschlussfläche 13 zwei schlitzartige Nuten 15 eingefräst, welche vorgesehen sind, um die lamellenartigen Verbindungselemente bzw. Flachdübel 1 aufzunehmen. Dabei ist es wichtig, dass die beiden Schlitze derart ausgefräst sind, dass die beiden Lamellen 1 je mindestens hälftig aufgenommen werden können. Vorrichtungen für das Herstellen derartiger Nutschlitze sind bestens bekannt und werden zudem in einer Reihe von Druckschriften im Stand der Technik beschrieben. Verwiesen sei beispielsweise auf das Schweizer Patent CH 622 981 oder das europäische Patent EP 0 884 144, um nur einige zu nennen. Die in der Holzabschlussfläche 13 gefrästen Nuten 15 dienen zur Aufnahme der Lamellen 1 und ermöglichen eine unsichtbare stabile Holzverbindung. Dabei werden, wie nun in Fig. 4 schematisch in Perspektive dargestellt, mittels einer Nutfräsmaschine in jedes der zu verbindenden Bauteile Schlitze 15 eingefräst, in welche Nuten die Lamellen 1 eingefügt bzw. eingesteckt werden. Nach Einstecken der Lamellen 1 in die Schlitze 15 der beiden Holzbauteile 11 ist eine hundertprozentig passgenaue Verbindung zwischen den beiden Holzwerkstücken 11 möglich. Zusätzlich können vor dem Einstecken der Lamellen 1 diese mit einem Klebstoff bzw. einem Leim versehen werden, um die Ausrissreissfestigkeit für feste Verbindungen zu erhöhen. Allerdings hat sich gezeigt, dass durch Verwendung der erfindungsgemäss vorgeschlagenen Faser bzw. Spanverbundwerkstoffen kein Klebstoff oder Leim mehr verwendet werden muss, welcher zusätzlich die Lamellen anquillt, um Toleranzen zu überwinden. Durch die Verwendung der erfindungsgemäss vorgeschlagenen Materialien erübrigt sich die Notwendigkeit der Quellung der Lamellen.

In Fig. 5 schliesslich sind mögliche Beispiele dargestellt, wie unter Verwendung von erfindungsgemäss vorgeschlagenen Lamellen zwei Holzstücke miteinander verbunden werden können.

Die in Fig. 1 bis 5 dargestellten Lamellen bzw. Verbindungen zweier Werkstücke sind lediglich Beispiele und dienen dem besseren Verständnis der vorliegenden Erfindung. Wie bereits oben erwähnt, sind die verschiedensten Dimensionen bzw. Ausgestaltungen von lamellenartigen Verbindungselementen möglich und auch das Verbinden verschiedenartigster Werkstücke aus Holz oder irgend anderen Materialien ist möglich.

Die erfindungsgemäss vorgeschlagenen Verbindungselemente bzw. deren Herstellung weisen mehrere Vorteile auf, wie die folgenden:
- Einsatz von substantiell kostengünstigeren Rohstoffen,
- substantielle Reduktion der Fertigungsschritte,
- Fertigungsautomatisierung in bis heute nicht erreichbarem Umfang,
- geringe Schwankungen der Produkteigenschaften,
- besseres Beherrschen der Produktionsparameter, sowie
- mögliches Herstellen mittels Stanz- oder Spritzverfahren.

Zudem können die Produkteigenschaften durch Verwendung unterschiedlicher Fasern oder Späne sowie durch unterschiedliche Verwendung von Bindemittel entscheidend beeinflusst werden.

## Patentansprüche

1. Verbindungselement zum Verbinden von vorzugsweise flächigen Bereichen (13) zweier Werkstücke (11), in welchen Bereichen mindestens je eine schlitzartige Vertiefung (15) ausgebildet ist, wobei das Element (1) plättchenartig bzw. lamellenartig ausgebildet ist, derart, dass es in den beiden schlitzartigen Vertiefungen mindestens teilweise einführbar bzw. einsteckbar ist, **dadurch gekennzeichnet, dass** die plättchenartigen bzw. lamellenartigen Elemente (1) aus einem Verbundwerkstoff hergestellt sind.

2. Verbindungselement nach Anspruch 1, **dadurch gekennzeichnet, dass** es sich um einen Faserverbund- bzw. Spanverbundwerkstoff handelt.

3. Verbindungselement nach einem der Ansprüche 1 oder 2, **dadurch gekennzeichnet, dass** es sich um einen Verbundwerkstoff mit einem Polymerbindemittel handelt.

4. Verbindungselement nach einem der Ansprüche 1 bis 3, **dadurch gekennzeichnet, dass** der Verbundwerkstoff fasern- oder schnitzel- bzw. spanartiges Holzmaterial oder Holzstaub aufweist, sowie ein Polymerbindemittel bzw. eine Polymermatrix, wie insbesondere ein Reaktivharz.

5. Verbindungselement nach einem der Ansprüche 1 bis 4, **dadurch gekennzeichnet, dass** es sich beim Verbundwerkstoff um ein druckfestes Holzfaser- und/oder Holzspanverbundmaterial handelt, wie beispielsweise MDF (mitteldichte Holzfaserplatte), HDF (hochdichte Holzfaserplatte) oder um ein Spanmaterial, aufweisend als Bindemittel ein Reaktionsharz, wie beispielsweise Phenolharze, Polymetylendiisocyanat, weitere polyurethanbasierende Bindemittel, ungesättigte Polyester, Vinylester, Alkydharze, Diallylphtalate und Epoxidharze, Melaminmischharze, Formaldehyd-Harnstoffharze, Resorcin-/Phenolresorcinharze und/oder Polymetylendiisocyanat.

6. Verbindungselement nach einem der Ansprüche 1 bis 4, **dadurch gekennzeichnet, dass** der Verbundwerkstoff eine Thermoplastmatrix aufweist, beispielsweise aus Polyethylen, Polypropylen - sowohl Homo- wie Copolymer - Polystyrol, Styrol-Copolymer, Polyvinylchlorid, Ethylen/Vinylacetat-Copolymer und/oder Mischungen davon, und dass weiter vorzugsweise ein Haftvermittler vorgesehen ist, beispielsweise auf Basis von Maleinsäureanhydridgepfropftem Ethylen oder Propylenpolymeren.

7. Verbindungselement nach einem der Ansprüche 1 bis 6, **dadurch gekennzeichnet, dass** es ellipsenähnlich dimensioniert ist mit einer Dicke, geeignet, um in entsprechende schlitzartige Vertiefungen eingeführt zu werden.

8. Verbindungselement nach einem der Ansprüche 1 bis 6, **dadurch gekennzeichnet, dass** das Element rechteckförmig, kreisrund, oval, dreieckförmig, sechseckförmig, etc. ausgebildet ist.

9. Verbindungselement nach einem der Ansprüche 1 bis 8, **dadurch gekennzeichnet, dass** es eine raue bzw. strukturierte oder eine glatte Oberfläche aufweist, sowie in Einsteckrichtung ausgebildete, vorzugsweise leicht vorstehende Führungsflächen für das verbesserte Einführen bzw. Einstecken des Elementes in eine schlitzartige Vertiefung.

10. Verbindungselement nach einem der Ansprüche 1 bis 9, **dadurch gekennzeichnet, dass** es je in Einsteckrichtung in die beiden schlitzartigen Vertiefungen weitgehendst kreisförmig, elliptisch, trapezförmig und/oder eckig ausgebildete Einsteckkanten aufweist und das Verbindungselement je seitlich, d.h. im Bereich des Aneinanderstossens der gerundeten, vorstehenden Konturen, gerade ausgebildete Führungskanten aufweist.

11. Verbindungselement nach einem der Ansprüche 1 bis 3 sowie 7 bis 10, **dadurch gekennzeichnet, dass** der Verbundwerkstoff ein kartonartiges oder papierartiges Material ist, insbesondere auf Basis von Zellstofffasern bzw. Zellstoffspänen bzw. -schnitzel sowie ggf. Naturfasern.

12. Verfahren zur Herstellung eines Verbindungselementes nach einem der Ansprüche 1 bis 11, **dadurch gekennzeichnet, dass** das Element mittels Stanzen oder Fräsen aus einer MDF, HDF oder Spanplatte hergestellt wird, wobei die MDF, HDF oder Spanplatte im Wesentlichen aus einem Holzfaser- und/oder Holzspanverbundwerkstoff hergestellt ist.

13. Herstellung eines Verbindungselementes nach einem der Ansprüche 1 bis 11, **dadurch gekennzeichnet, dass** das Element mittels Laminieren, Extrudieren, Pressen, Spritzpressen oder Spritzgiessen hergestellt wird.

14. Verfahren zum Verbinden zweier Werkstücke, je vorzugsweise aufweisend einen flächigen Bereich, **dadurch gekennzeichnet, dass** das Verbinden mittels mindestens eines Verbindungselementes nach einem der Ansprüche 1 bis 11 erfolgt, welches in entsprechende schlitzartige Vertiefungen bzw. Nutschlitze, angeordnet in je einer der flächigen Bereiche, eingesteckt wird und anschliessend die beiden Werkstücke zusammengefügt werden.

15. Verwendung des Verbindungselementes nach einem der Ansprüche 1 bis 11 zum Verbinden zweier Werkstücke, wie beispielsweise zweier plattenartiger Holzwerkstücke.
